# EUROPÄISCHE PATENTSCHRIFT

(11) **EP 0 661 462 B1**
(45) Veröffentlichungstag und Bekanntmachung des Hinweises auf die Patenterteilung: **04.03.1998**
(21) Anmeldenummer: 94119792.3
(22) Anmeldetag: 15.12.1994
(51) Int. Cl.: F16B 13/08

(54) **Spreizdübel**
Expansion dowel
Cheville d'expansion

(30) Priorität: 23.12.1993 DE 4344195
(43) Veröffentlichungstag der Anmeldung: 05.07.1995
(73) Patentinhaber: Adolf Würth GmbH & Co. KG, D-74653 Künzelsau (DE)
(72) Erfinder: Steck, Otto, D-74670 Forchtenberg (DE)
(74) Vertreter: Patentanwälte Ruff, Beier, Schöndorf und Mütschele

(56) Entgegenhaltungen:
- EP-A- 0 494 741
- DE-A- 2 406 207

## Beschreibung

Die Erfindung geht aus von einem Dübel mit einem Zugbolzen und einer Dübelhülse, die vorzugsweise aus Metall besteht.

Ein solcher Dübel ist aus der DE-A-2 406 207 bekannt.

Es sind auch andere Spreizdübel bekannt, die einen Zugbolzen mit einem Aufspreizkonus im Bereich ihres inneren in das Dübelloch hinein gerichteten Endes aufweisen. Das Setzen geschieht dadurch, daß mit einem Setzwerkzeug die Dübelhülse gegenüber dem Zugbolzen nach innen verschoben wird und sich dabei aufspreizt. Sie stellt einen Hinterschnitt her. Die Längsschlitze der Dübelhülse, die zwischen sich die verformbaren Segmente bilden, sind daher in Richtung auf das innere Ende des Dübellochs offen. Beim Setzen des Dübels wird auf diese Weise eine Zwangsspreizung mit einem Nachspreizverhalten erreicht.

Der Erfindung liegt die Aufgabe zugrunde, einen Dübel zu schaffen, der einfach und kostengünstig herzustellen ist, aus nur wenigen Teilen besteht und ohne ein Setzwerkzeug angebracht werden kann. Dübel dieser Art sollen insbesondere bei Belastung auf Zug verwendbar sein, beispielsweise zur Anbringung in Decken.

Zur Lösung dieser Aufgabe schlägt die Erfindung einen Dübel mit den Merkmalen des Anspruchs 1 vor. Weiterbildungen sind Gegenstand von Unteransprüchen.

Der Dübel nach der Erfindung wird in ein gebohrtes Dübelloch eingesteckt bzw. geschlagen, und ist sofort ohne weitere Maßnahmen festgelegt. Ein auf den Zugbolzen ausgeübter Zug führt unmittelbar zu einem Aufspreizen der Stege, die sich mit ihren freien in Richtung auf die Außenseite der Wand gerichteten Enden an den Wänden des Bohrlochs abstützen. Der Dübel wird vorzugsweise in auf die Bohrlochgröße abgestimmten Abmessungen gefertigt, so daß bei richtiger Dübelgröße eine sofortige Verankerung gegeben ist.

An dem äußeren Ende des Zugbolzens können die üblichen Befestigungsmöglichkeiten vorgesehen sein, beipielsweise Haken, Ösen, ein Gewinde o. dgl.

Im Gegensatz zu den bekannten Dübelarten verlaufen die Stege bzw. Arme, die zur Festlegung an den Wänden des Dübellochs dienen, nicht in das Dübelloch hinein, sondern in umgekehrter Richtung. Dadurch erfolgt bei Zugbelastung des Dübels eine Belastung der Stege auf Druck.

In Weiterbildung der Erfindung kann vorgesehen sein, daß die Dübelhülse einen nicht aufweitbaren zylindrischen Bereich aufweist, in dem ein zylindrischer Abschnitt des Zugbolzens geführt ist. Dieser Abschnitt kann mit Vorteil eine solche axiale Länge aufweisen, daß bei der maximal möglichen Zugbewegung des Zugbolzens diese Führung aufrechterhalten bleibt. Die Führung kann insbesondere dazu dienen, die Aufspreizung der Dübelhülse gleichmäßig über den Umfang zu gestalten.

Erfindungsgemäß kann in Weiterbildung vorgesehen sein, daß der nicht aufweitbare Bereich der Dübelhülse, bei dem es sich insbesondere auch um den Führungsbereich handeln kann, topfförmig ausgebildet ist. Er ist also von einem insbesondere ebenen Boden abgeschlossen, an dem ein axiales Ende des Zugbolzens während des Einsetzens oder Einschlagens des Dübels anliegen kann, um dafür zu sorgen, daß während des Einschlagens des Dübels noch keine Verformung der Dübelhülse auftritt.

Erfindungsgemäß kann in Weiterbildung vorgesehen sein, daß die freien Enden der Stege radial nach außen aufgeweitet oder aufgewölbt sind. Auf diese Weise kann der Dübel so ausgebildet werden, daß die Kanten der freien Enden der Stege auf einem Durchmesser liegen, der etwas größer ist als der Durchmesser des Dübellochs. Dann erfolgt beim Einschlagen des Dübels in das Dübelloch eine elastische Verformung, bei der die Kanten jedoch schon an der Wand des Bohrlochs anliegen. Sobald der Dübel auf Zug belastet ist, graben sich dann die Kanten der Stegenden in die Bohrungswandung ein. Es kann zu diesem Zweck vorgesehen sein, daß die Kanten an den Außenseiten scharfkantig ausgebildet sind.

In Weiterbildung schlägt die Erfindung vor, daß die Hülse einstückig aus einem Stück Blech gestanzt und geformt sein kann, beispielsweise mit Vorteil aus Federstahl. Die Hülse besteht dann aus einem einzigen Bauteil, so daß der aus Zugbolzen und Dübelhülse bestehende Dübel insgesamt aus nur zwei Teilen besteht.

Zur Verbesserung des Halteverhaltens vor Beginn der Zugbelastung kann erfindungsgemäß vorgesehen sein, daß die Dübelhülse federnde, sich an die Wand des Bohrlochs anlegende Krallen aufweist, die beim Einsetzen des Dübels elastisch nachgeben, bei Aufhören der Einschubbewegung jedoch eine kraftschlüssige Festlegung der Dübelhülse bewirken. Zu diesem Zweck können die Krallen in Richtung auf das äußere Ende des Zugbolzens radial nach außen gespreizt verlaufen. Diese Krallen wirken nur bei der anfänglichen Festlegung der Dübelhülse mit, bevor mit Hilfe des Zugbolzens Zugkräfte ausgeübt werden.

Die Krallen können, wie die Erfindung vorschlägt, als getrenntes Bauteil hergestellt und mit der Dübelhülse verbunden werden. Dies kann beispielsweise durch Vernieten oder Punktschweißen o. dgl. geschehen. Die Herstellung als getrenntes Bauteil hat den Vorteil, daß hier ein anderes beispielsweise leichter verformbares Material verwendet werden kann.

Ebenfalls möglich ist es auch, daß die federnden Krallen einstückig mit der Dübelhülse aus einem Blech gestanzt und verformt werden.

Die Krallen können beispielsweise aus einem Blechteil gestanzt werden, wobei sie durch Einschnitte voneinander getrennt sein können. Die Anordnung dieser Einschnitte kann so gewählt werden, daß sie versetzt zu den Längsschlitzen zwischen den Stegen der Dübelhülse liegen.

Die Erfindung schlägt in Weiterbildung vor, daß die in Richtung auf das äußere Ende des Zugbolzens verlaufenden Aufweitflächen des Aufweitbereichs, bei dem es sich um einen Abschnitt des Zugbolzens handeln kann, konkav geschweift verlaufen, während sie im Endbereich des Aufweitbereichs, also an der Stelle des größten Durchmessers, in eine konvexe Rundung übergehen. Auf diese Weise werden die Stege nicht um ihre Übergangsstellen zu dem nicht aufweitbaren Bereich der Dübelhülse nach außen verklappt, sondern über ihre gesamte Länge nach außen gekrümmt, was für die Materialbelastung günstiger ist.

Wenn der Aufweitbereich als ein Teil des Zugbolzens ausgebildet ist, so besteht der Dübel nach der Erfindung aus zwei, höchstens drei Einzelteilen, so daß der Dübel mit geringem Aufwand hergestellt werden kann. Er kann in vorkonfektioniertem Zustand geliefert werden.

Weitere Merkmale, Einzelheiten und Vorzüge ergeben sich aus den Patentansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Fig.1: einen schematischen Längsschnitt durch den Endbereich einer Bohrung mit eingesetztem teilweise geschnittenem Dübel;
- Fig. 2: eine Aufsicht auf den Dübel der Fig. 1 von oben in Fig. 1;
- Fig. 3: das innere Ende eines Dübels in eine der Fig. 1 ähnlichen Darstellung bei einer zweiten Ausführungsform;
- Fig. 4: eine Aufsicht auf das innere Ende des Dübels von oben in Fig. 3.

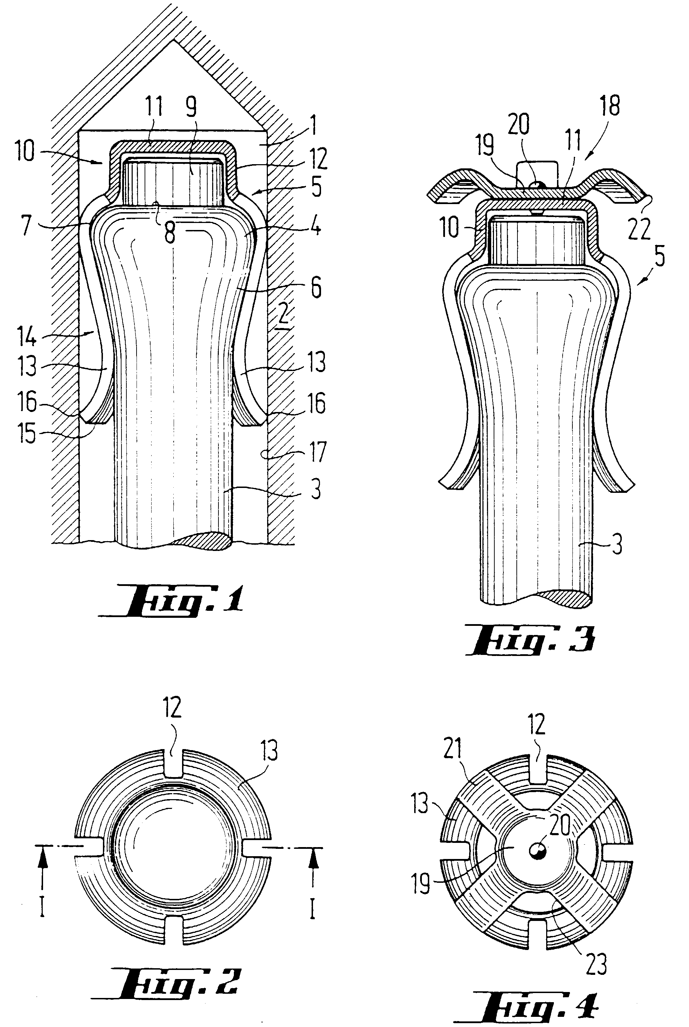

In Fig. 1 ist nur das Ende eines Dübellochs 1 in einer Wand 2 dargestellt.

In das Dübelloch eingesetzt ist ein Dübel, der einen Zugbolzen 3 und eine auf das innere Ende 4 des Zugbolzens 3 aufgesetzte Dübelhülse 5 aufweist. Unter dem inneren Ende soll das in das Dübelloch 1 hineinragende Ende des Zugbolzens 3 verstanden werden, während das äußere Ende dementsprechend das Ende des Zugbolzens 3 ist, das aus dem Dübelloch bzw. der Wand 2 herausragt. An dem äußeren, in den Figuren nicht dargestellten Ende enthält der Zugbolzen beispielsweise ein Außengewinde, so daß an dem eingesetzten Bolzen ein zu befestigender Gegenstand mit einer Mutter festgelegt werden kann. Ebenfalls möglich ist es natürlich, daß der Zugbolzen an seinem äußeren Ende eine Öse oder einen Haken aufweist.

Im Bereich des inneren Endes erweitert sich der Außenumfang des Zugbolzens 3 zunächst konkav und bildet dadurch einen Aufweitbereich 6, dessen Außenfläche tangential in den Rest des Zugbolzens 3 übergeht. Im Bereich des größten Durchmessers geht die Aufweitfläche des Aufweitbereichs 6 in eine konvexe Abrundung 7 über. Abgeschlossen wird der Aufweitbereich von einer ebenen Stufe 8, die quer zur Längsrichtung des Zugankers 3 verläuft. An den Aufweitbereich schließt sich dann nochmals ein Abschnitt 9 mit zylindrischer Form an, dessen Durchmesser deutlich kleiner als der größte Durchmesser des Aufweitbereichs 6 ist. Beispielsweise kann der Durchmesser des Führungsabschnitts 9 dem Durchmesser des Zugbolzens 3 in dessen äußerem Bereich entsprechen.

Die Dübelhülse weist einen an ihrem inneren Ende angeordneten nicht aufweitbaren Bereich 10 auf, in dem die Dübelhülse 5 im dargestellten Beispiel topfförmig ausgebildet ist. Der Topf wird von einem ebenen Boden 11 und einer zylindrischen Wand 12 gebildet.

Am Rand des Topfes erweitert sich die Dübelhülse 5 zunächst stufenförmig nach außen bis zu einer Stelle größten Durchmessers. Diese Stelle größten Durchmessers entspricht etwa dem Innendurchmesser des Dübellochs 1. Von dieser Stelle des größten Durchmessers verringert sich der Durchmesser der Dübelhülse in Richtung auf das äußere Ende der Zugstange wieder, wobei hier die Dübelhülse flächig an der Aufweitfläche des Aufweitbereichs 6 anliegt. Die Verringerung des Durchmessers der Dübelhülse setzt sich bis zum äußeren Ende des Aufweitbereichs 6 fort.

In dem sich an den nicht aufweitbaren Bereich 10 der Dübelhülse 5 in Richtung auf das äußere Ende des Zugbolzens 3 anschließenden Bereich ist die Dübelhülse mit Längsschlitzen 12 versehen, so daß einzelne Stege 13 gebildet sind, die einen aufweitbaren Bereich 14 der Dübelhülse bilden. Die Zahl der Längsschlitze 12 und damit die Zahl der zwischen ihnen gebildeten Stege 13 kann beispielsweise 3 oder 4 sein.

Die Stege 13 sind im Bereich ihrer freien Enden 15 vor Beginn des Aufweitbereichs 6 des Zugbolzens 3 leicht radial nach außen gebogen, so daß ihre radialen Außenkanten 16 an der Wand 17 des Bohrlochs 1 anliegen. Die Dübelhülse kann so hergestellt werden, daß in nicht verformtem Zustand, bevor als der Dübel in das Dübelloch 1 eingesetzt wird, die freien Kanten 16 einen etwas größeren Kreis beschreiben als es dem Durchmesser des Dübellochs 1 entspricht. Dadurch liegen die Kanten 16 bei Einschieben des Dübels bereits unter Spannung an der Wand 17 an.

Die axiale Länge des am inneren Ende 4 angeordneten Führungsabschnitts abschnitts 9 entspricht im wesentlichen der Tiefe des 12. Beim Einschieben des Dübels liegt die Dübelhülse also sowohl mit dem Boden 11 ihres nicht aufweitbaren Bereichs 10 auf dem ebenen Ende des Führungsabschnitts 9 als auch mit dem Beginn ihrer Stege 13 auf der Stufe 8 auf, so daß sichergestellt ist, daß bei Einschieben des Dübels keine Verformung erfolgt. Sobald der Dübel auf Zug beansprucht wird, verbiegen sich die Stege 13 radial nach außen, so daß die Kanten 16 ihrer freien Enden 15 sich in die Wandung 17 des Bohrlochs 1 eingraben. Hierzu ist nur eine geringe Zugbewegung des Zugbolzens 3 erforderlich. Während dieser Zugbewegung bleibt der Führungsabschnitt 9 des Zugbolzens 3 in dem nicht aufweitbaren Führungsbereich 10.

Die Aufsicht der Fig. 2 zeigt, daß die Längsschlitze 12, die zwischen sich die Stege 13 bilden, gleichmäßig über den Umfang verteilt sind. Der Schnitt der Fig. 1 verläuft längs der in Fig. 2 eingezeichneten Linie I-I. Selbstverständlich könnten auch beispielsweise drei Längsschlitze 12 vorhanden sein.

Fig. 3 zeigt eine abgeänderte Ausführungsform des Dübels. Die Dübelhülse 5, die im übrigen ebenso wie der Zugbolzen 3 genauso ausgebildet ist wie bei der Ausführungsform nach Fig. 1 und 2, enthält an ihrem inneren Ende eine zusätzliche Halteeinrichtung 18. Diese ist aus einem Stück Blech durch Stanzen und Verbiegen hergestellt. Sie enthält einen mittleren ebenen Abschnitt 19, der auf dem Boden 11 des nicht aufweitbaren Bereichs 10 der Dübelhülse aufgelegt und daran befestigt ist, beispielsweise durch eine Punktschweißung oder auch wie im vereinfacht dargestellten Beispiel durch einen Niet 20. Die Halteeinrichtung 18 weist im dargestellten Beispiel vier radial verlaufende Krallen 21 auf, die hakenartig gebogen sind und die in ihrem radialen Endbereich schräg radial nach außen und in Richtung auf das äußere Ende des Zugbolzens 3 abfallend verlaufen. Ihre Außenkanten 22 liegen etwa auf dem gleichen Kreis wie die Außenkanten 16 der Stege 13 oder aber auch auf einem etwas größeren Kreis. Die Aufgabe dieser Halteeinrichtung 18 besteht darin, eine kraftschlüssige Verbindung der Dübelhülse mit dem Bohrloch 1 herzustellen, bevor auf den Zugbolzen 3 eine Zugkraft ausgeübt wird. Daher kann die Halteeinrichtung 18 anders, als dies dargestellt ist, auch aus einem dünneren oder einem billigeren Material hergestellt sein.

Die Aufsicht der Fig. 4 zeigt, daß die Krallen 21 etwa mittig zu den Segmenten 13 verlaufen. Es ist selbstverständlich auch möglich und wird von der Erfindung bevorzugt, die Krallen 21 in Umfangsrichtung so anzuordnen, daß die zwischen ihnen gebildeten Einschnitte 23 gegenüber den Längsschlitzen 12 zwischen den Segmenten 13 versetzt sind, bei gleicher Anzahl mittig versetzt. Die Fig. 4 wurde aus Gründen der besseren Darstellung so gezeichnet, daß die Schlitze 12 noch sichtbar sind.

Während bei der in Fig. 3 und 4 dargestellten Ausführungsform die Halteeinrichtung 18 als getrenntes Bauteil ausgebildet ist, das mit der Dübelhülse 5 verbunden wird, wird von der Erfindung ebenfalls vorgeschlagen, die Halteeinrichtung mit ihren Krallen 22 einstückig mit der Dübelhülse aus einem Blech herzustellen. In diesem Fall würde jede Kralle, die ja sehr schmal sein kann, zwischen je zwei Aufweitstegen 13 angeordnet sein.

## Patentansprüche

1. Dübel mit
einem Zugbolzen (3), der
an seinem äußeren Ende eine Anbringungsmöglichkeit für einen zu befestigenden Gegenstand und
einer Dübelhülse (5), die
einen nicht aufweitbaren Bereich (10) und
einen sich daran anschließenden aufweitbaren Bereich (14) aufweist, der
einzelne durch einseitig offene Längsschlitze (12) getrennte Stege (13) aufweist, die
der nicht aufweitbare Bereich (10) im Bereich des inneren Endes der Dübelhülse (5) angeordnet ist und
die Stege (13) sich in Richtung auf das äußere Ende des Zugbolzens (3) erstrecken, dadurch gekennzeichnet daß der Zugbolzen (3) im Bereich seines gegenüberliegenden inneren Endes (4) einen Aufweitkörper (6) aufweist, der sich in Richtung auf das äußere Ende des Zugbolzens (3) verjüngt, und daß die Stege (13) mindestens teilweise an dem Aufweitkörper (6) anliegen.

2. Dübel nach Anspruch 1, bei dem die Hülse (5) einen nicht aufweitbaren zylindrischen Bereich (10) aufweist, in dem ein zylindrischer Abschnitt (9) des Zugbolzens (3) geführt ist.

3. Dübel nach Anspruch 1 oder 2, bei dem der nicht aufweitbare Bereich (10) topfförmig ausgebildet ist.

4. Dübel nach einem der vorhergehenden Ansprüche, bei dem die freien Enden (15) der Stege (13) radial nach außen aufgeweitet sind.

5. Dübel nach einem der vorhergehenden Ansprüche, bei dem die Hülse (5) einstückig aus einem Blech gestanzt und geformt ist.

6. Dübel nach einem der vorhergehenden Ansprüche, bei dem die Hülse (5) eine Halteeinrichtung (18) aufweist.

7. Dübel nach Anspruch 6, bei dem die Halteeinrichtung (18) federnde Krallen aufweist, die in Richtung auf das äußere Ende des Zugbolzens (3) und radial nach außen gespreizt verlaufen.

8. Dübel nach Anspruch 6 oder 7, bei dem die Halteeinrichtung (18) als getrenntes Bauteil hergestellt und mit der Dübelhülse (5) verbunden ist.

9. Dübel nach Anspruch 6 oder 7, bei dem die Halteeinrichtung (18) einstückig mit der Dübelhülse (5) aus einem Blech gestanzt und geformt ist.

10. Dübel nach einem der Ansprüche 7 bis 9, bei dem die Krallen (21) durch Einschnitte (23) voneinander getrennt sind.

11. Dübel nach einem der Ansprüche 7 bis 10, bei dem die Einschnitte (23) zwischen den Krallen (21) zu den Schlitzen (12) zwischen den Stegen (13) versetzt angeordnet sind.

12. Dübel nach einem der vorhergehenden Ansprüche, bei dem die Aufweitfläche des Aufweitkörpers (6) im Längsschnitt konkav verläuft und im Bereich des größten Durchmessers in einen konvexen Rand (7) übergeht.

13. Dübel nach einem der vorhergehenden Ansprüche, bei dem die Dübelhülse (5) und/oder die Halteeinrichtung (18) aus Federstahl hergestellt ist.

14. Dübel nach einem der vorhergehenden Ansprüche, bei dem die Stege (13) der Dübelhülse (5) bei Zugbelastung des Dübels auf Druck beansprucht werden.

15. Dübel nach einem der vorhergehenden Ansprüche, bei dem der Aufweitkörper (6) von einem einstückigen Bereich des Zugbolzens (3) gebildet wird.

## Claims

1. Dowel with a tie bolt (3), which at its outer end has a fitting possibility for an article to be fixed and a dowel shell (5), which has a non-expandable area (10) and an expandable area (14) connected thereto, which has individual arms (13) separated by elongated slots (12) open at one side, the non-expandable area (10) being located in the vicinity of the inner end of the dowel shell (5) and the arms (13) extend in the direction of the outer end of the tie bolt (3), characterized in that the tie bolt (3) has in the vicinity of its facing, inner end (4) an expansion body (6), which tapers in the direction of the outer end of the tie bolt (3) and that the arms (13) engage at least partly on the expansion body (6).

2. Dowel according to claim 1, wherein the shell (5) has a non-expandable, cylindrical area (10), in which is guided a cylindrical portion (9) of the tie bolt (3).

3. Dowel according to claim 1 or 2, wherein the non-expandable area (10) is cup-shaped.

4. Dowel according to one of the preceding claims, wherein the free ends (5) of the arms (13) are radially outwardly expanded.

5. Dowel according to one of the preceding claims, wherein the shell (5) is punched and shaped in one piece from a metal sheet.

6. Dowel according to one of the preceding claims, wherein the shell (5) has a holding device (18).

7. Dowel according to claim 6, wherein the holding device (18) has resilient claws, which run in radially outwardly expanded manner towards the outer end of the tie bolt (3).

8. Dowel according to claim 6 or 7, wherein the holding device (18) is manufactured as a separate component and is joined to the dowel shell (5).

9. Dowel according to claim 6 or 7, wherein the holding device (18) is punched and shaped from a metal sheet in one piece with the dowel shell (5).

10. Dowel according to one of the claims 7 to 9, wherein the claws (21) are separated to one another by slits (23).

11. Dowel according to one of the claims 7 to 10, wherein the slits (23) between the claws (21) are displaced with respect to the slots (12) between the arms (13).

12. Dowel according to one of the preceding claims, wherein the expansion surface of the expansion body (6) is concave in longitudinal section and the area of largest diameter passes into a convex edge (7).

13. Dowel according to one of the preceding claims, wherein the dowel shell (5) and/or holding device (18) is made from spring steel.

14. Dowel according to one of the preceding claims, wherein the arms (13) of the dowel shell (5) are compressively loaded in the case of tensile loading of the dowel.

15. Dowel according to one of the preceding claims, wherein the expansion body (6) is formed by a one-piece area of the tie bolt (3).

## Revendications

1. Piton comprenant
un boulon tirant (3) qui présente
à son extrémité extérieure, une possibilité d'assemblage destinée à un objet devant être fixé et
une douille de piton (5) qui présente
une zone non-expansible (10) et
une zone expansible (14) faisant suite à cette dernière et présentant
des ailettes (13) individuelles, séparées par des fentes longitudinales (12) ouvertes d'un côté,
piton dans lequel la zone non-expansible (10) est située dans la région de l'extrémité intérieure de la douille de piton (5), et les ailettes (13) s'étendant en direction de l'extrémité extérieure du boulon tirant (3)
piton caractérisé en ce que le boulon tirant (3) présente, dans la zone de son extrémité intérieure se trouvant à l'opposé, un corps d'expansion (6) qui s'effile en direction de l'extrémité extérieure dudit boulon tirant (3), et en ce que les ailettes (13) prennent appui, au moins en partie, sur le corps d'expansion (6).

2. Piton suivant la revendication 1, dans lequel la douille (5) présente une zone cylindrique non-expansible (10) dans laquelle est guidé un tronçon cylindrique (9) du boulon tirant (3).

3. Piton suivant la revendication 1 ou 2, dans lequel la zone non-expansible (10) a une forme de godet.

4. Piton suivant l'une des revendications qui précèdent, dans lequel les extrémités libres (15) des ailettes (13) sont écartées radialement vers l'extérieur.

5. Piton suivant l'une des revendications qui précèdent, dans lequel la douille (5) est découpée d'un seul tenant dans une tôle, et mise en forme.

6. Piton suivant l'une des revendications qui précèdent, dans lequel la douille (5) présente un élément de maintien (18).

7. Piton suivant la revendication 6, dans lequel l'élément de maintien (18) présente des crampons à effet de ressort qui s'écartent dans le sens de l'extrémité extérieure du boulon tirant (3) et radialement vers l'extérieur.

8. Piton suivant la revendication 6 ou 7, dans lequel l'élément de maintien (18) est fabriqué sous forme d'élément séparé et raccordé à la douille de piton (5).

9. Piton suivant la revendication 6 ou 7, dans lequel l'élément de maintien (18) est découpé d'un seul tenant dans une tôle avec la douille de piton (5) et mis en forme.

10. Piton suivant l'une des revendications 7 à 9, dans lequel les crampons (21) sont séparés par des entailles (23).

11. Piton suivant l'une des revendications 7 à 10, dans lequel les entailles (23) séparant les crampons (21) sont en décalage par rapport aux fentes (12) séparant les ailettes (13).

12. Piton suivant l'une des revendications qui précèdent, dans lequel la face d'expansion du corps d'expansion (6) est concave, en coupe longitudinale, et se transforme en bord convexe (7) dans la zone de plus grand diamètre.

13. Piton suivant l'une des revendications qui précèdent, dans lequel la douille de piton (5) et/ou l'élément de maintien (18) sont fabriqués en acier à ressorts.

14. Piton suivant l'une des revendications qui précèdent, dans lequel les ailettes (13) de la douille de piton (5) sont soumises à une sollicitation en compression quand le piton est sollicité à la traction.

15. Piton suivant l'une des revendications qui précèdent, dans lequel le corps d'expansion (6) est formé par une zone solidaire du boulon tirant (3).
